# EUROPÄISCHE PATENTSCHRIFT

(11) **EP 2 229 816 B1**
(45) Veröffentlichungstag und Bekanntmachung des Hinweises auf die Patenterteilung: **08.06.2016**
(21) Anmeldenummer: 10001295.4
(22) Anmeldetag: 09.02.2010
(51) Int. Cl.: A21C 3/02

(54) **Vorrichtung zum Walzen von flächigen Lebensmittelteigbahnen**
Device for rolling flat dough panel
Dispositif de laminage d'une bande de pâte plat

(30) Priorität: 18.03.2009 DE 102009013601
(43) Veröffentlichungstag der Anmeldung: 22.09.2010
(73) Patentinhaber: Freiberger Lebensmittel GmbH & Co. Produktions- und Vertriebs KG, 13439 Berlin (DE)
(72) Erfinder: Heinisch, Oliver, Dipl.-ing., 76275 Ettlingen (DE); Istok, Günter, 76437 Rastatt (DE)
(74) Vertreter: Lichti - Patentanwälte Partnerschaft mbB

(56) Entgegenhaltungen:
- WO-A1-00/65918
- WO-A1-2006/016005
- DE-A1- 10 137 116
- JP-A- H10 180 837
- US-A- 5 024 719
- US-A1- 2006 286 244

## Beschreibung

Die Erfindung betrifft eine Lebensmittelteig-Walzvorrichtung zum Walzen von flächigem Teigbahnen, mit wenigstens einem umlaufenden Trägerband zum Transportieren der flächigen Teigbahn und mit wenigstens einer gegen die auf dem Trägerband befindliche Teigbahn andrückbaren, drehangetriebenen Walze mit einer Heizeinrichtung. Die Erfindung ist ferner auf eine insbesondere für die Verwendung in einer solchen Vorrichtung vorgesehene Walze der vorgenannten Art gerichtet. Darüber hinaus bezieht sich die Erfindung auf ein unter Verwendung einer solchen Vorrichtung durchführbares Verfahren zum Walzen von flächigen Teigbahnen, indem die flächige Teigbahn mittels wenigstens eines umlaufenden Trägerbandes durch den Zwischenraum zwischen dem Trägerband und wenigstens einer drehangetriebenen Walze mit einer Heizeinrichtung transportiert wird, welche gegen die auf dem Trägerband befindliche Teigbahn angedrückt wird.

Beim Walzen von flächigen Teigbahn, z.B. in Form eines Endlosbandes, ist es häufig erwünscht, die zu verarbeitende Teigbahn einer Heißbehandlung unter Druck mittels Walzen zu unterziehen. So kann es beispielsweise bei der großtechnischen Herstellung von, beispielsweise als Tiefkühlprodukte vorgesehenen, Pizzen erwünscht sein, die flächige Teigbahn einer Heißwalzung zu unterziehen, um eine rasche Oberflächenversiegelung des Teigs zu erzielen, welche zur Folge hat, daß das in dem Teig enthaltene Wasser anläßlich eines anschließenden Vorbackens desselben nicht mehr durch Verdampfen entweichen kann, sondern im Innern des Teigs zurückgehalten wird und nach Art eines Treibmittels wirkt, welches zu einer Auflockerung der Konsistenz des gebackenen Teigs mit inneren Hohlräumen führt. Im Falle von Pizzateig hat es sich hierbei als zweckmäßig erwiesen, die auf einem umlaufenden Trägerband transportierte Teigbahn mittels einer entsprechend der translatorischen Bewegung des Bandes rotierenden Walze bei Temperaturen im Bereich von etwa 100°C bis etwa 120°C mit Druck zu beaufschlagen. Um für die erforderlichen Temperaturen zu sorgen, weist die Walze eine Konvektionsheizung auf. Das Dokument US 5024719 A1 zeigt in der Nähe von Prägeoberflächen angeordnete Heizelemente. Das Dokument US 2006/0286244 A1 zeigt eine Lebensmittelteig-Walzvorrichtung mit Phäsevorsprüngen und einem Trägerband.

Nachteilig ist einerseits der relativ hohe Energieaufwand zum Beheizen der Walze derart, daß die genannten Temperaturen in der mit dem flächigen Gut in Kontakt tretenden Mantelfläche der Walze aufrechterhalten werden können. Da die Walze oberflächig infolge Kontakt mit dem - kalten - Teig stets abgekühlt wird und die Heizleistung so eingestellt werden sollte, daß sie dem Rechnung trägt, besteht insbesondere im Falle eines zeitweiligen Unterbrechens des Bearbeitungsprozesses ferner die Gefahr einer temporären Überhitzung der Walze, was zu Anhaftungen aus eingebrannten Teigresten oder Gleitmitteln, wie insbesondere Speiseöl, an der Walze führen kann und relativ häufige Reinigungszyklen der Walze erforderlich macht. Wird andererseits die Temperatur der Walze entsprechend geringer gewählt, so neigt der

Teig beim Passieren der Walze um so mehr zu einem Anhaften an derselben, so daß es vonnöten ist, den Teig vorsorglich mit einem Gleitmittelfilm, in der Regel in Form vom Speiseöl, zu benetzen, was insbesondere aus Gründen eines hieraus resultierenden übermäßigen Brennwertes des fertigen Produktes in aller Regel unerwünscht ist. Darüber hinaus besteht ein Nachteil von herkömmlichen Walzen darin, daß der Teig nach dem - wenn auch nur relativ kurzzeitigen - Erhitzen, wenn er die Walze passiert hat, eine verminderte Verformbarkeit aufweist, so daß eine nachträgliche Formgebung der aus dem Teig, z.B. durch nachträgliches Ausstanzen, erhaltenen Portionen, wie Pizzen oder dergleichen, mit einigen Schwierigkeiten behaftet sein kann.

Der Erfindung liegt daher die Aufgabe zugrunde, eine Vorrichtung zum Walzen von flächigen Teigbahnen der eingangs genannten Art, eine insbesondere für die Verwendung in einer solchen Vorrichtung vorgesehene Walze sowie ein mittels einer solchen Vorrichtung durchführbares Verfahren zum Walzen von flächigen Gut der eingangs genannten Art auf einfache und kostengünstige Weise dahingehend weiterzubilden, daß bei einem gegenüber dem Stand der Technik verminderten Energieverbrauch den vorgenannten Nachteilen in wirksamer Weise begegnet werden kann.

In vorrichtungstechnischer Hinsicht wird diese Aufgabe erfindungsgemäß dadurch gelöst, daß die Mantelfläche der Walze mit hiervon radial vorstehenden Vorsprüngen ausgebildet ist, daß der endständige, mit dem flächigen Gut in Kontakt tretende Abschnitt der Vorsprünge der Walze zumindest oberflächig aus einem elektrisch leitfähigen Material gefertigt oder mit einem solchen beschichtet ist, und daß die Heizeinrichtung von einer Induktionsheizeinrichtung gebildet ist, welche sich außenseitig der Walze entlang zumindest eines Teils ihrer axialen Länge erstreckt.

In verfahrenstechnischer Hinsicht sieht die Erfindung zur Lösung des ihr zugrunde liegenden Problems bei einem Verfahren der eingangs genannten Art ferner vor, daß die flächige Teigbahn mittels von der Mantelfläche der Walze radial vorstehenden Vorsprüngen bereichsweise komprimiert wird, wobei ein sich um den Umfang des jeweiligen Vorsprungs erstreckender Umfangswulst aus dem Material des flächigen Gutes geformt wird, und daß der endständige, mit dem flächigen Gut in Kontakt tretende Abschnitt der Vorsprünge der Walze, welcher zumindest oberflächig aus einem elektrisch leitfähigen Material gefertigt oder mit einem solchen beschichtet ist, mittels einer Heizeinrichtung in Form einer sich außenseitig der Walze entlang zumindest eines Teils ihrer axialen Länge erstreckenden Induktionsheizeinrichtung erhitzt wird, um die flächige Teigbahn zugleich zu erhitzen.

Die erfindungsgemäße Ausgestaltung bietet einerseits gegenüber herkömmlichen, konvektiv beheizten Walzen eine erhebliche Energieersparnis, da die außenseitig der Walze angeordnete Induktionsheizeinrichtung für eine Erhitzung der Walze lediglich an deren Oberfläche - oder genauer: an der Mantelfläche ihrer Vorsprünge - sorgt, an welcher sie mit dem flächigen Gut in Kontakt tritt. Dabei wird die rotierende Walze stets beim Passieren der z.B. stationär angeordneten Induktionsheizeinrichtung oberflächig aufgeheizt, tritt mit der flächigen Teigbahn in Kontakt, wird anläßlich dessen abgekühlt und beim Passieren der Induktionsheizeinrichtung wieder aufgeheizt. Darüber hinaus ist die Walze selbst gegenüber einer herkömmlichen, mit einer Konvektionsheizung ausgestatteten Walze, welche eine möglichst homogene Wärmeleitung von der Konvektionsheizeinrichtung bis an deren gesamte Mantelfläche erfordert, erheblich einfacher und folglich preisgünstiger aufgebaut. Im Falle eines zeitweiligen Stillstandes der Walze kann die Induktionsheizeinrichtung abgeschaltet werden, wobei lokale Überhitzungen der Walze zuverlässig vermieden werden und - wenn überhaupt - ausschließlich an einem der flächigen Teigbahn abgewandten Oberflächenbereich der Walze, nämlich an der Induktionsheizeinrichtung, auftreten können, wo die flächige Teigbahn nicht beeinträchtigt werden kann. Ferner läßt sich die für die jeweils zu bearbeitende flächige Teigbahn erforderliche Oberflächentemperatur der Walze exakt einstellen, so daß diese nur in sehr geringem Maße oder überhaupt nicht mit Gleitmitteln, wie Speiseöl, benetzt werden muß, ohne daß die Gefahr einer Anhaftung des Teigs an der Oberfläche der Walze besteht.

Die Induktionsheizeinrichtung als solche kann nach Art von bekannten Induktionsheizungen ausgebildet sein, d.h. im Innern der Induktionsheizeinrichtung wird ein zeitlich veränderliches Magnetfeld erzeugt, welches in der elektrisch leitfähigen Mantelfläche der Walze Wirbelströme erzeugt, die wiederum infolge des elektrischen Widerstandes des Walzenmaterials zu dessen Erwärmung führen. Das elektrisch leitfähige Material, aus welchem die Vorsprünge der Walze zumindest ober- bzw. mantelflächig gefertigt bzw. mit welchem sie beschichtet sind, kann vorzugsweise mittels einer darunter angeordneten Isolierschicht aus einem elektrisch nicht leitenden und/oder einem nicht wärmeleitenden Material von den übrigen Komponenten der Walze isoliert sein, um eine Wärmeleitung ins Innere der Walze zu verhindern.

Die Größe der von der Mantelfläche der Walze etwa radial vorstehenden Vorsprüngen kann zweckmäßig der Größe je einer aus der flächigen Teigbahn, an einer stromab der Walze angeordneten Schneidestation auszuschneidenden Formteilen, wie Pizzen, Baguettes, Kuchen oder anderen, aus Teig erzeugbaren Zuschnitten, entsprechen. Folglich lassen sich mittels der erfindungsgemäßen Walzenstruktur erzeugte Pizzen oder dergleichen z.B. mit einem verdickten Umfangsrand versehen, welcher sich um den Umfang der Kontaktstellen der Vorsprünge der Walze mit der Teigbahn infolge von nach außen verdrängtem Teigmaterial bildet. Weil die Formgebung zugleich mit der Erwärmung erfolgt, wird ferner verhindert, daß sich die von den Vorsprüngen der Walze gewalzten Bereiche des flächigen Teigbahn stromab der Walze elastisch zurückverformen. Die Mantel- bzw. Oberfläche der Vorsprünge der Walze kann im übrigen im wesentlichen eben ausgebildet sein, wobei mit "im wesentlichen eben" auch solche Oberflächen angesprochen sind, welche Strukturen in Form von kleineren Vertiefungen oder Erhöhungen aufweisen, wie sie beispielsweise zum Einbringen von aus optischen Gründen erwünschten Strukturen in Teigbahnen erwünscht sein können.

In bevorzugter Ausführung kann vorgesehen sein, daß ausschließlich der endständige, mit der flächigen Teigbahn in Kontakt tretende Abschnitt der Vorsprünge der Walze zumindest oberflächig aus einem elektrisch leitfähigen Material gefertigt oder mit einem solchen beschichtet ist, während die zwischen den Vorsprüngen zurückgesetzt angeordneten Walzenabschnitte aus einem nicht oder nur geringfügig induktiv erwärmbaren Material gefertigt sind. Auf diese Weise erfolgt eine Erhitzung des flächigen Gutes nur bereichsweise dort, wo aufgrund des Walzvorgangs eine Formgebung der flächigen Teigbahn geschieht wobei die zwischen diesen "Vorformlingen" der flächigen Teigbahn (bzw. zwischen den Vorsprüngen der Walze) angeordneten Bereiche der flächigen Teigbahn weder geformt noch insbesondere thermisch beeinträchtigt werden, so daß dieses Material wiederverwendet werden kann, wie es im Falle einer Teigbahn auch vorgesehen und sogar von Vorteil ist, weil sich die zum "Gehen" des Teigs erforderliche Verweilzeit vor dem Walzen/Formen/Erhitzen insgesamt erhöht, ohne zusätzliche Transportwege mittels des Trägerbandes vorsehen zu müssen.

Um für einen hohen Wirkungsgrad der oberflächigen Erwärmung der Walze zu sorgen, ist das elektrisch leitfähige Material, aus welchem die Vorsprünge der Walze zumindest oberbzw. mantelflächig gefertigt oder mit welchem sie beschichtet sind, zweckmäßig ein ferromagnetisches Material, welches eine verhältnismäßig hohe magnetische Permeabilität besitzt.

Die Induktionsheizeinrichtung kann sich vorzugsweise über im wesentlichen die gesamte axiale Länge der Walze erstrecken, um für eine gleichmäßige oberflächige Erwärmung sämtlicher Vorsprünge derselben zu sorgen. Die Induktionsheizeinrichtung kann weiterhin bevorzugt mit Abstand von der Mantelfläche der Walze (bzw. deren Vorsprünge) angeordnet sein, so daß die Erwärmung berührungslos erfolgt.

Gemäß einer Weiterbildung der erfindungsgemäßen Vorrichtung zum Erwärmen von flächigen Teigbahnen kann vorgesehen sein, daß das Trägerband um einen Umfangsabschnitt der Walze herumgeführt ist. Auf diese Weise ist es möglich, auch bei verhältnismäßig schneller Vorschubgeschwindigkeit des Trägerbandes für die erforderliche Kontaktzeit des flächigen Gutes mit den Vorsprüngen der Walze zu sorgen. Hierbei kann das Trägerband beispielsweise um einen Winkel zwischen etwa 20° und etwa 150°, insbesondere zwischen etwa 30° und etwa 120°, um einen Umfangsabschnitt der Walze herumgeführt sein. Der Radius des um den Umfangsabschnitt der Walze herumgeführten Trägerbandes entspricht zweckmäßig weitgehend dem Außenradius der Walze von deren Mittelachse bis zum freien Ende ihrer Vorsprünge.

Zur Führung des Trägerbandes um einen Umfangsabschnitt der Walze herum können in vorteilhafter Ausgestaltung im Bereich der Längsränder angeordnete Führungsrollen vorgesehen sein, welche insbesondere sowohl oberhalb als auch unterhalb des Trägerbandes angeordnet sind und letzteres zwischen sich führen.

Das Trägerband selbst kann grundsätzlich aus beliebigen Materialien gefertigt sein, wobei in dem Fall, da es sich bei den flächigen Teigbahnen um Lebensmittel handelt, aus Hygienegründen vorzugsweise ein aus Edelstahl gefertigtes Trägerband zum Einsatz gelangen kann. Ein derartiges Trägerband ist als solches beispielsweise aus der DE 10 2004 012 444 B2 bekannt.

Die Oberflächen der Vorsprünge beschreiben zweckmäßig im wesentlichen die Mantelfläche eines Kreiszylinders, d.h. die Oberfläche eines jeden Vorsprungs der Walze ist derart konvex gekrümmt, daß sich die Oberflächen sämtlicher Vorsprünge zur Mantelfläche eines Kreiszylinders ergänzen, welche durch die zwischen den Vorsprüngen angeordneten Zwischenräume unterbrochen ist. Der Querschnitt der Vorsprünge ist hingegen frei wählbar und kann an eine beliebige Form der aus der flächigen Teigbahn zu formenden "Vorformlingen" angepaßt werden. In diesem Zusammenhang sei auch darauf hingewiesen, daß die Vorsprünge selbstverständlich auch lösbar am Außenumfang des Walzenkörpers befestigbar sein können, um sie je nach gerade zu verarbeitendem flächigen Gut in einfacher Weise auswechseln zu können.

Die Oberfläche der Vorsprünge kann ferner eine umfangsseitige Fase aufweisen, um insbesondere in dem oben angesprochenen Fall für die bestmögliche Ausbildung eines verdickten Umfangsrandes der flächigen Teigbahn um die jeweiligen Vorsprüngen der Walze herum zu sorgen.

Um die auf der Mantelfläche der Walze zur Verfügung stehende Fläche bestmöglich auszunutzen, kann es weiterhin von Vorteil sein, wenn die Vorsprünge versetzt zueinander angeordnet sind.

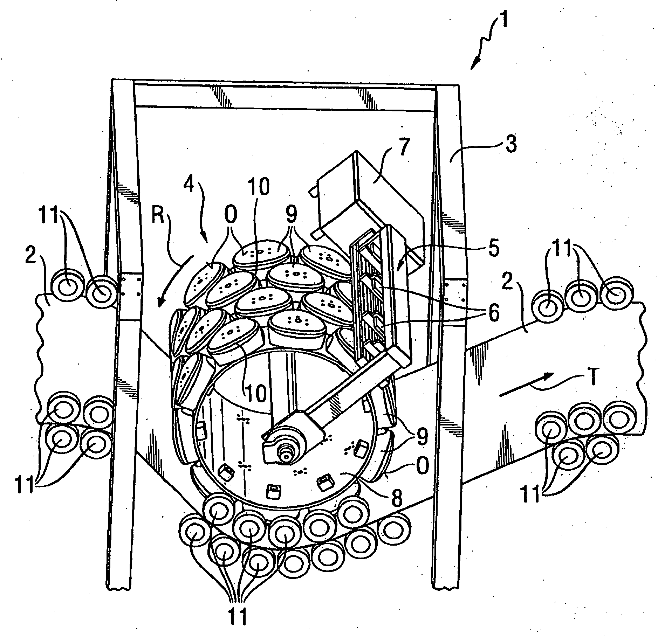

Weitere Merkmale und Vorteile der Erfindung ergeben sich aus der nachfolgenden Beschreibung eines Ausführungsbeispiels unter Bezugnahme auf die Zeichnung. Dabei zeigt die einzige Figur: eine schematische perspektivische Ansicht einer Ausführungsform einer erfindungsgemäßen Vorrichtung zum Walzen von flächigen Teigbahnen.

Die in der Zeichnung schematisch wiedergegebene Vorrichtung 1 zum Walzen von flächigen Teigbahnen, wie beispielsweise einer Endlosbahn Pizzateig, umfaßt ein umlaufendes Trägerbend 2, welches beispielsweise aus Edelstahl gefertigt ist und von welchem in der Zeichnung zum Zwecke der Veranschaulichung lediglich das Obertrum dargestellt ist, welches die flächige Teigbahn (ebenfalls nicht gezeigt) transportiert. Die Vorrichtung 1 umfaßt des weiteren eine z.B. an einem Traggestell 3 drehbar gelagerte Walze 4, welche mit einem solchen Abstand oberhalb des Trägerbandes 2 angeordnet ist, um bei der gewünschten Dicke der flächigen Teigbahn für den gewünschten Andruck desselben an die Walze 4 zu sorgen, wobei - wiederum zum Zwecke der Veranschaulichung - die Befestigung der Walze 4 an dem Traggestell 3 nicht gezeigt ist. Die Walze 4 ist folglich aufgrund ihres, vorzugsweise verstellbaren, Abstandes von dem Trägerband 2 gegen die auf dem Trägerband 2 transportierte flächige Teigbahn andrückbar. Des weiteren nicht dargestellt ist ein steuerbarer Drehantrieb der Walze 4, um diese in Rotation zu versetzen (Pfeil R), welcher mit einem ebenfalls nicht gezeigten translatorischen Antrieb des Trägerbandes 2 derart synchronisiert ist, daß die Umlaufgeschwindigkeit (Pfeil R) der Walze 4 der Vorschubgeschwindigkeit (Pfeil T) des Trägerbandes 2 entspricht. Zu beiden Seiten des Trägerbandes 2 können sich weitere - nicht dargestellte - Stationen anschließen, wie beispielsweise eine Teigknetstation, gefolgt von einer oder mehreren Kaltwalzstationen zum Erzeugen der Teigbahn (jeweils links des Zeichnungsausschnittes), sowie eine Schneidestation zum Ausschneiden von Pizzen, gegebenenfalls gefolgt von einer oder mehreren Belegestationen, an welcher die Pizza mit flüssigen bzw. pastösen und/oder festen Auflagen, wie Tomatensauce, Käse, Wurst, Zwiebeln, Artischocken, Paprika, Oliven etc., belegt werden kann, sowie einer Vorbackstation (jeweils rechts des Zeichnungsausschnittes).

Der Walze 4 ist eine Induktionsheizeinrichtung 5 zugeordnet, welche sich an einem dem Trägerband 2 abgewandten Bereich quer über axiale Länge der Walze 4 hinweg erstreckt und mit einem gewissen Abstand von der Walze 4 angeordnet ist. Die Induktionsheizeinrichtung 5 weist beispielsweise eine Mehrzahl an in Bezug auf die axiale Länge der Walze 4 nebeneinander angeordnete Spulen 6 auf, welche an einen Hochspannungswechselstromgenerator 7 angeschlossen sind, um ein zeitlich veränderliches Magnetfeld zu erzeugen.

Die Walze 4 weist beim vorliegenden Ausführungsbeispiel ein kreiszylindrisches Tragteil 8 auf, an dessen Außenumfang eine Mehrzahl an radial vorstehenden Vorsprüngen 9 festgelegt sind, welche versetzt zueinander angeordnet sind und deren Oberflächen O im wesentlichen einen Kreiszylinder beschreiben, d.h. die Oberfläche eines jeden Vorsprungs 9 der Walze 4 ist gemäß der Mantelfläche eines Kreiszylinders konvex gekrümmt. Um den Umfang der Vorsprünge 9 erstreckt sich jeweils eine Fase 10. Die Vorsprünge 9, deren Größe und Form etwa derjenigen einer aus der Teigbahn durch Zurschneiden zu erzeugenden Pizza entsprechen, dienen zur Ausbildung eines verdickten Randes der Pizzen, wobei die Vorsprünge 9 beim vorliegenden Ausführungsbeispiel einen etwa runden Querschnitt besitzen, um runde Pizzen zu bilden. Indes kann der Querschnitt der Vorsprünge 9 selbstverständlich auch andersartig ausgestaltet sein, wie beispielsweise etwa rechteckig, sofern die Erzeugung rechteckiger Pizzen mit verdicktem Rand erwünscht ist.

Der endständige, mit der flächigen Teigbahn in Kontakt tretende Abschnitt eines jeden Vorsprungs 9 ist aus einem elektrisch leitfähigen, ferromagnetischen Material, wie beispielsweise Eisen gefertigt, z.B. in Form einer die Außenfläche eines jeden Vorsprungs 9 bildenden, gekrümmten, im wesentlichen runden Eisenplatte. Letztere ist unter Zwischenanordnung einer darunter liegenden Lage aus einem elektrisch und Wärme isolierenden Material, wie beispielsweise Kunststoff (z.B. Polyethylen, Polypropylen oder dergleichen), auf einem mit dem Tragteil 8 verschraubten Sockelteil eines jeden Vorsprungs 9 befestigt. Auf diese Weise werden infolge des von der Induktionsheizeinrichtung 6 erzeugten, zeitlich veränderlichen B-Feldes ausschließlich in den endständigen, aus ferromagnetischem Material bestehenden Abschnitten eines jeden Vorsprungs 9, welche gemeinsam die Mantelfläche der Walze 4 bilden, Wirbelströme erzeugt, wodurch diese äußeren Abschnitte bei jedem Passieren der Induktionsheizeinrichtung 5 (bei rotierender Walze 4) aufgrund ihres elektrischen Widerstandes auf die gewünschte Temperatur erhitzt werden, um den Teig oberflächig zu versiegeln und bei einem Backvorgang verdampfendes Wasser unter Bildung einer porösen Teigstruktur zurückzuhalten.

Um auch bei einer relativ hohen Transportgeschwindigkeit T des Trägerbandes 2 - bzw. bei einer hiermit korrespondierenden, relativ hohen Rotationsgeschwindigkeit R der Walze 4 - die erforderliche Kontaktzeit der Teigbahn mit der Walze 4 (oder genauer: mit deren außenseitig erhitzten Vorsprüngen 9) zu gewährleisten, ist das Trägerband 2 um einen Umfangsabschnitt der Walze 4 von im vorliegenden Fall z.B. etwa 70° bis 80° herumgeführt. Hierzu sind jeweils an den Umlenkstellen des Trägerbandes positionierte Anordnungen von Führungsrollen 11 vorgesehen, welche sowohl oberhalb als auch unterhalb des Trägerbandes 2 angeordnet sind und letzteres folglich zwischen sich führen. Die Führungsrollen 11 sind jeweils an den Längsrändern des Trägerbandes angeordnet und können antriebslos an entsprechenden Halteeinrichtungen (nicht gezeigt) gelagert sein. Sie können ferner zumindest geringfügig in Richtung des Trägerbandes 2 elastisch vorbelastet und mantelseitig mit einem Material mit hohem Haftkoeffizient, wie beispielsweise Gummi, beschichtet sein.

## Patentansprüche

1. Lebensmittelteig-Walzvorrichtung (1) zum Walzen von flächigen Teigbahnen, mit wenigstens einem umlaufenden Trägerband (2) zum Transportieren der flächigen Teigbahn und mit wenigstens einer gegen die auf dem Trägerband (2) befindliche Teigbahn andrückbaren, drehangetriebenen Walze (4) mit einer Heizeinrichtung (5), **dadurch gekennzeichnet, daß** die Mantelfläche der Walze (4) mit hiervon radial vorstehenden Vorsprüngen (9) ausgebildet ist, daß der endständige, mit der Teigbahn in Kontakt tretende Abschnitt der Vorsprünge (9) der Walze (4) zumindest oberflächig aus einem elektrisch leitfähigen Material gefertigt oder mit einem solchen beschichtet ist, und daß die Heizeinrichtung (5) von einer Induktionsheizeinrichtung gebildet ist, welche sich außenseitig der Walze (4) entlang zumindest eines Teils ihrer axialen Länge erstreckt.

2. Teig-Walzvorrichtung nach Anspruch 1, **dadurch gekennzeichnet, daß** ausschließlich der endständige, mit der Teigbahn in Kontakt tretende Abschnitt der Vorsprünge (9) der Walze (4) zumindest oberflächig aus einem elektrisch leitfähigen Material gefertigt oder mit einem solchen beschichtet ist.

3. Teig-Walzvorrichtung nach Anspruch 1 oder 2, **dadurch gekennzeichnet, daß** das elektrisch leitfähige Material der Vorsprünge (9) der Walze (4) ein ferromagnetisches Material ist.

4. Teig-Walzvorrichtung nach einem der Ansprüche 1 bis 3, **dadurch gekennzeichnet, daß** sich die Induktionsheizeinrichtung (5) über im wesentlichen die gesamte axiale Länge der Walze (4) erstreckt.

5. Teig-Walzvorrichtung nach einem der Ansprüche 1 bis 4, **dadurch gekennzeichnet, daß** die Induktionsheizeinrichtung (5) mit Abstand von der Mantelfläche der Walze (4) angeordnet ist.

6. Teig-Walzvorrichtung nach einem der Ansprüche 1 bis 5, **dadurch gekennzeichnet, daß** das Trägerband (2) um einen Umfangsabschnitt der Walze (4) herumgeführt ist.

7. Teig-Walzvorrichtung nach Anspruch 6, **dadurch gekennzeichnet, daß** das Trägerband (2) um einen Winkel zwischen 20° und 150°, insbesondere zwischen 30° und 120°, um einen Umfangsabschnitt der Walze (4) herumgeführt ist.

8. Teig-Walzvorrichtung nach Anspruch 6 oder 7, **dadurch gekennzeichnet, daß** das Trägerband (2) mittels an seinen Längsrändern angeordneter Führungsrollen (11) um einen Umfangsabschnitt der Walze (4) herumgeführt ist.

9. Teig-Walzvorrichtung nach einem der Ansprüche 1 bis 8, **dadurch gekennzeichnet, daß** das Trägerband (2) aus Edelstahl gefertigt ist.

10. Teig-Walzvorrichtung nach einem der Ansprüche 1 bis 9, **dadurch gekennzeichnet, daß** die Oberflächen (O) der Vorsprünge (9) im wesentlichen die Mantelfläche eines Kreiszylinders beschreiben.

11. Teig-Walzvorrichtung nach einem der Ansprüche 1 bis 10, **dadurch gekennzeichnet, daß** die Oberfläche der Vorsprünge (9) eine umfangsseitige Fase (10) aufweisen.

12. Teig-Walzvorrichtung nach einem der Ansprüche 1 bis 11, **dadurch gekennzeichnet, daß** die Vorsprünge (9) versetzt zueinander angeordnet sind.

13. Verwendung einer drehangetriebenen und mit einer Heizeinrichtung (5) ausgestatteten Walze (4) zum Walzen von flächigen Lebensmittelteigbahnen, **dadurch gekennzeichnet, daß** die Mantelfläche der Walze (4) mit hiervon radial vorstehenden Vorsprüngen (9) ausgebildet ist, daß der endständige, mit der Teigbahn in Kontakt tretende Abschnitt der Vorsprünge (9) der Walze (4) zumindest oberflächig aus einem elektrisch leitfähigen Material gefertigt oder mit einem solchen beschichtet ist, und daß die Heizeinrichtung (5) von einer Induktionsheizeinrichtung gebildet ist, welche sich außenseitig der Walze (4) entlang zumindest eines Teils ihrer axialen Länge erstreckt.

14. Verwendung nach Anspruch 13, **dadurch gekennzeichnet, daß** die Walze (4) die kennzeichnenden Merkmale wenigstens eines der Ansprüche 2 bis 5 oder 10 bis 12 aufweist.

15. Verfahren zum Walzen von flächigen Lebensmittelteigbahnen unter Verwendung einer Lebensmittelteig-Walzvorrichtung nach einem der Ansprüche 1 bis 12, indem die flächige Teigbahn mittels des wenigstens einen umlaufenden Trägerbandes (2) durch den Zwischenraum zwischen dem Trägerband (2) und der wenigstens einen drehangetriebenen Walze (4) mit der Heizeinrichtung (5) transportiert wird, welche gegen die auf dem Trägerband (2) befindliche Teigbahn angedrückt wird, **dadurch gekennzeichnet, daß** die Teigbahn mittels der von der Mantelfläche der Walze (4) radial vorstehenden Vorsprünge (9) bereichsweise komprimiert wird, wobei ein sich um den Umfang des jeweiligen Vorsprungs (9) erstreckender Umfangswulst aus dem Teigmaterial der flächigen Teigbahn geformt wird, und daß der endständige, mit der Teigbahn in Kontakt tretende Abschnitt der Vorsprünge (9) der Walze (4), welcher zumindest oberflächig aus einem elektrisch leitfähigen Material gefertigt oder mit einem solchen beschichtet ist, mittels der Heizeinrichtung (5) in Form einer sich außenseitig der Walze (4) entlang zumindest eines Teils ihrer axialen Länge erstreckenden Induktionsheizeinrichtung erhitzt wird, um die Teigbahn zugleich zu erhitzen.

## Claims

1. Edible-dough-rolling apparatus (1) for rolling flat dough sheets, having at least one circulating carrier belt (2) for transporting the flat dough sheets, and having at least one rotationally driven roller (4), which can be pressed against the dough sheet located on the carrier belt (2) and has a heating device (5), **characterized in that** the lateral surface of the roller (4) is designed with protrusions (9) projecting from it radially, **in that** the end portion of the protrusions (9) of the roller (4) which comes into contact with the dough sheet is produced, at least at the surface, from an electrically conductive material or is coated with such a material, and **in that** the heating device (5) is formed by an induction heating device which extends, on the outside of the roller (4), along at least part of the axial length of the latter.

2. Dough-rolling apparatus according to Claim 1, **characterized in that** it is exclusively that end portion of the protrusions (9) of the roller (4) which comes into contact with the dough sheet which is produced, at least at the surface, from an electrically conductive material or is coated with such a material.

3. Dough-rolling apparatus according to Claim 1 or 2, **characterized in that** the electrically conductive material of the protrusions (9) of the roller (4) is a ferromagnetic material.

4. Dough-rolling apparatus according to one of Claims 1 to 3, **characterized in that** the induction heating device (5) extends over essentially the entire axial length of the roller (4).

5. Dough-rolling apparatus according to one of Claims 1 to 4, **characterized in that** the induction heating device (5) is arranged at a distance from the lateral surface of the roller (4).

6. Dough-rolling apparatus according to one of Claims 1 to 5, **characterized in that** the carrier belt (2) is guided around a circumferential portion of the roller (4).

7. Dough-rolling apparatus according to Claim 6, **characterized in that** the carrier belt (2) is guided around a circumferential portion of the roller (4) by an angle between 20° and 150°, and in particular between 30° and 120°.

8. Dough-rolling apparatus according to Claim 6 or 7, **characterized in that** the carrier belt (2) is guided around a circumferential portion of the roller (4) by means of guide rollers (11) arranged along its longitudinal periphery.

9. Dough-rolling apparatus according to one of Claims 1 to 8, **characterized in that** the carrier belt (2) is produced from stainless steel.

10. Dough-rolling apparatus according to one of Claims 1 to 9, **characterized in that** the surfaces (0) of the protrusions (9) describe essentially the lateral surface of a circular cylinder.

11. Dough-rolling apparatus according to one of Claims 1 to 10, **characterized in that** the surface of the protrusions (9) has a circumferential chamfer (10).

12. Dough-rolling apparatus according to one of Claims 1 to 11, **characterized in that** the protrusions (9) are offset in relation to one another.

13. Use of a rotationally driven roller (4), which is equipped with a heating device (5), for the purpose of rolling flat edible-dough sheets, **characterized in that** the lateral surface of the roller (4) is designed with protrusions (9) projecting from it radially, **in that** the end portion of the protrusions (9) of the roller (4) which comes into contact with the dough sheet is produced, at least at the surface, from an electrically conductive material or is coated with such a material, and **in that** the heating device (5) is formed by an induction heating device which extends, on the outside of the roller (4), along at least part of the axial length of the latter.

14. Use according to Claim 13, **characterized in that** the roller (4) has the characterizing features at least of one of Claims 2 to 5 or 10 to 12.

15. Method of rolling flat edible-dough sheets using an edible-dough-rolling apparatus according to one of Claims 1 to 12, the flat dough sheet being transported, by means of the at least one circulating carrier belt (2), through the interspace between the carrier belt (2) and the at least one rotationally driven roller (4), which has a heating device (5) and is pressed against the dough sheet located on the carrier belt (2), **characterized in that** the dough sheet is compressed in certain regions by means of the protrusions (9), which project radially from the lateral surface of the roller (4), wherein a circumferential bead, extending around the circumference of the respective protrusion (9), is formed in the dough material of the flat dough sheet, and **in that** the end portion of the protrusions (9) of the roller (4) which comes into contact with the dough sheet, and is produced, at least at the surface, from an electrically conductive material or is coated with such a material, is heated by means of a heating device (5), in the form of an induction heating device extending, on the outside of the roller (4), along at least part of the axial length of the latter, in order for the dough sheet to be heated at the same time.

## Revendications

1. Dispositif de laminage de pâte alimentaire (1) pour laminer des bandes de pâte plates, avec au moins un tapis de transport (2) tournant pour transporter la bande de pâte plate et avec au moins un rouleau (4) entraîné en rotation pouvant appuyer contre la bande de pâte se trouvant sur le tapis de transport (2), avec un dispositif de chauffage (5), **caractérisé en ce que** la surface d'enveloppe du rouleau (4) est réalisée avec des saillies (9) saillant dans le plan radial, que la section des saillies (9) du rouleau (4) entrant en contact à la fin avec la bande de pâte est réalisée au moins en surface à partir d'un matériau électriquement conducteur ou est revêtue d'un tel matériau et que le dispositif de chauffage (5) est formé par un dispositif de chauffage par induction s'étendant du côté extérieur du rouleau (4) le long d'au moins une partie de sa longueur axiale.

2. Dispositif de laminage de pâte selon la revendication 1, **caractérisé en ce que** seule la section des saillies (9) du rouleau (4) entrant en contact à la fin avec la bande de pâte est fabriquée au moins en surface à partir d'un matériau électriquement conducteur ou est revêtue d'un tel matériau.

3. Dispositif de laminage de pâte selon la revendication 1 ou 2, **caractérisé en ce que** le matériau électriquement conducteur des saillies (9) du rouleau (4) est un matériau ferromagnétique.

4. Dispositif de laminage de pâte selon l'une quelconque des revendications 1 à 3, **caractérisé en ce que** le dispositif de chauffage par induction (5) s'étend pour l'essentiel sur la totalité de la longueur axiale du rouleau (4).

5. Dispositif de laminage de pâte selon l'une quelconque des revendications 1 à 4, **caractérisé en ce que** le dispositif de chauffage par induction (5) est disposé à une certaine distance de la surface d'enveloppe du rouleau (4).

6. Dispositif de laminage de pâte selon l'une quelconque des revendications 1 à 5, **caractérisé en ce que** le tapis de transport (2) est guidé autour d'une section périphérique du rouleau (4).

7. Dispositif de laminage de pâte selon la revendication 6, **caractérisé en ce que** le tapis de transport (2) est guidé autour d'une section périphérique du rouleau (4) selon un angle compris entre 20° et 150°, notamment entre 30° et 120°.

8. Dispositif de laminage de pâte selon la revendication 6 ou 7, **caractérisé en ce que** le tapis de transport (2) est guidé autour d'une section périphérique du rouleau (4) à l'aide de rouleaux de guidage (11) disposés au niveau de ses bords longitudinaux.

9. Dispositif de laminage de pâte selon l'une quelconque des revendications 1 à 8, **caractérisé en ce que** le tapis de transport (2) est fabriqué en inox.

10. Dispositif de laminage de pâte selon l'une quelconque des revendications 1 à 9, **caractérisé en ce que** les surfaces (O) des saillies (9) décrivent pour l'essentiel la surface d'enveloppe d'un cylindre circulaire.

11. Dispositif de laminage de pâte selon l'une quelconque des revendications 1 à 10, **caractérisé en ce que** la surface des saillies (9) comporte un biseau (10) sur le côté périphérique.

12. Dispositif de laminage de pâte selon l'une quelconque des revendications 1 à 11, **caractérisé en ce que** les saillies (9) sont disposées de façon décalée les unes par rapport aux autres.

13. Utilisation d'un rouleau (4) entraîné en rotation et équipé d'un dispositif de chauffage (5) pour laminer des bandes de pâte alimentaire plates, **caractérisée en ce que** la surface d'enveloppe du rouleau (4) est réalisée avec des saillies (9) saillant dans le plan radial, que la section des saillies (9) du rouleau (4) entrant en contact à la fin avec la bande de pâte est fabriquée au moins en surface à partir d'un matériau électriquement conducteur ou est revêtue d'un tel matériau et que le dispositif de chauffage (5) est formé par un dispositif de chauffage par induction s'étendant sur le côté extérieur du rouleau (4) le long d'au moins une partie de sa longueur axiale.

14. Utilisation selon la revendication 13, **caractérisée en ce que** le rouleau (4) présente les caractéristiques caractérisantes d'au moins une des revendications 2 à 5 ou 10 à 12.

15. Procédé pour laminer des bandes de pâte plates en utilisant un dispositif de laminage de pâte alimentaire selon l'une quelconque des revendications 1 à 12, en transportant la bande de pâte plate à l'aide de l'au moins un tapis de transport (2) tournant à travers l'espace intermédiaire prévu entre le tapis de transport (2) et l'au moins un rouleau (4) entraîné en rotation avec le dispositif de chauffage (5), ledit rouleau pouvant appuyer contre la bande de pâte se trouvant sur le tapis de transport (2), **caractérisé en ce que** la bande de pâte est comprimée par endroits à l'aide de saillies (9) saillant dans le plan radial hors de la surface d'enveloppe du rouleau (4), un bourrelet périphérique, composé de matériau de pâte de la bande de pâte plate, s'étendant autour de la périphérie de la saillie (9) respective étant formé et **caractérisé en ce que** la section des saillies (9) du rouleau (4) entrant en contact à la fin avec la bande de pâte, fabriquée au moins en surface à partir d'un matériau électriquement conducteur ou revêtue d'un tel matériau, est chauffée à l'aide du dispositif de chauffage (5) prenant la forme d'un dispositif de chauffage par induction s'étendant sur le côté extérieur du rouleau (4), le long d'au moins une partie de sa longueur axiale, pour chauffer en même temps la bande de pâte.
